# EUROPEAN PATENT SPECIFICATION

(11) **EP 3 239 652 B1**
(45) Date of publication and mention of the grant of the patent: **30.10.2019**
(21) Application number: 17169014.2
(22) Date of filing: 20.03.2013
(51) Int. Cl.: G01B 11/25, G02B 27/22

(54) **THREE DIMENSIONAL CAMERA AND PROJECTOR FOR SAME**
DREIDIMENSIONALE KAMERA UND PROJEKTOR DAFÜR
APPAREIL PHOTO TRIDIMENSIONNEL ET PROJECTEUR ASSOCIÉ

(30) Priority: 26.03.2012 US 201261615554 P
(43) Date of publication of application: 01.11.2017
(62) Divisional of application: 13769374.3
(73) Proprietor: Mantisvision Ltd., 4970602 Petach Tikva (IL)
(72) Inventor: Gordon, Eyal, 3478512 Haifa (IL); Abraham, Martin David, 4531612 Hod Hasharon (IL)
(74) Representative: Finnegan Europe LLP

(56) References cited:
- JP-A- 2011 085 834
- US-A1- 2007 121 310
- US-A1- 2011 188 054

## Description

### FIELD

The present invention is in the field of pattern projection, in particular for three dimensional imaging.

### PRIOR ART

Document US2007/121310A1 discloses a structured light projector. A lighting system included in a projector is provided with an LED array having LEDs and a reflective plate at the rear side of the LEDs in the light emitting direction.

Document JP2011 085834A discloses a projector, wherein the light emitted from an LED array is reflected back from reflective areas of a mirror.

Document US2011/188054A1 discloses a structured light projector using a laser array and having reflective surfaces.

### SUMMARY

The present invention is defined by the claims.

According to the present invention, a structured light projector according to claim 1 is provided. According to an aspect of the present invention, a three dimensional imaging apparatus is provided that comprises the structured light projector according to claim 1.

According to examples of the presently disclosed subject matter, the plurality of individual emitters can be characterized by substantially identical emitter size, substantially identical light divergence output, substantially identical light power output and substantially equal mutual spacing. The non-uniformity profile can be related to the light divergence output, and light power output of the individual emitters and can be related to the mutual spacing among the individual emitters.

According to further examples of the presently disclosed subject matter, the uniformity criterion can be further related to a target dynamic range.

According to still further examples of the presently disclosed subject matter, the uniformity criterion can be further associated with a relation between a density of the individual emitters in the laser array and a density of feature types in the structured light pattern.

In yet further examples of the presently disclosed subject matter, the mask can be sized according to a spatial intensity profile of the light emitted by the laser array.

In still further examples of the presently disclosed subject matter, the spatial intensity profile can define an area of uniform light of the laser array at the distance where the mask is positioned relative to the laser array.

In further examples of the presently disclosed subject matter, the mask can be sized further according to the uniformity criterion.

According to yet further examples of the presently disclosed subject matter, the mask can be sized further according to a light power transfer criterion.

According to examples of the presently disclosed subject matter, the laser array can be a VCSEL array.

According to examples of the presently disclosed subject matter, the laser array can be in compliance with a defective emitter criterion that is associated with a distribution and a ratio of individual defective emitters among the plurality of individual emitters.

According to examples of the presently disclosed subject matter, the laser array and the mask can be positioned with respect to one another at a distance that is less than 5mm.

According to examples of the presently disclosed subject matter, the laser array and the mask can be positioned with respect to one another at a distance that is less than 2mm.

Related to the invention but not claimed is a method of enabling 3D imaging. According to examples, the method of enabling 3D imaging can include: positioning a mask for providing a structured light pattern relative to a laser array that includes a plurality of individual emitters at a distance that is substantially minimal according to a non-uniformity profile of the plurality of individual emitters and according to a uniformity criterion related to the light intensity distribution across the mask plane; positioning projection optics in the optical path of light from individual emitters passing through the mask, to enable imaging of the structured light pattern onto an object; and positioning an imaging sensor in the optical path of reflected projected light to enable capturing of an image of the object with the structured light pattern projected thereon to further enable determining range parameters.

According to yet a further aspect of the presently disclosed subject matter there is provided a structured light patern according to claim 1. The distance between the laser array and the mask can be substantially minimized in the projector according to a non-uniformity profile of the plurality of individual emitters and according to a uniformity criterion related to the light intensity distribution across the mask plane. The projection optics can be adapted to image the structured light pattern onto an object.

Not claimed is a method of enabling 3D range finding that includes: positioning a mask for providing a structured light pattern relative to a laser array that includes a plurality of individual emitters at a distance that is substantially minimal according to a non-uniformity profile of the plurality of individual emitters and according to a uniformity criterion related to the light intensity distribution across the mask plane; and positioning projection optics in the optical path of light from individual emitters passing through the mask, to enable imaging of the structured light pattern onto an object.

Also not claimed is a method of enabling 3D range finding that includes: positioning a mask for providing a structured light pattern relative to a laser array that includes a plurality of individual emitters at a distance where according to a non-uniformity profile of the plurality of individual emitters and according to a desired uniformity of light intensity distribution across the mask plane is achieved; positioning projection optics in the optical path of light from individual emitters passing through the mask, to enable imaging of the structured light pattern onto an object; and positioning an imaging sensor in the optical path of reflected projected light to enable capturing of an image of the object with the structured light pattern projected thereon to further enable determining range parameters.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**FIG. 1** is a block diagram illustration of a projector for 3D range finding, according to examples of the presently disclosed subject matter;
**FIG. 2A** is an illustration of an example of the distribution of light at the plane of the emitters of the laser array or immediately adjacent to the emitting surfaces of the emitters;
**FIG. 2B** is an illustration of an example of the distribution of light at an intermediate plane located between a plane that is immediately adjacent to the emitting surfaces of the emitters and a plane at a distance from the emitters which is defined at least by a non-uniformity profile of the emitters and a uniformity criterion related to a desired light intensity distribution across the mask plane;
**FIG. 2C** is an illustration of an example of the distribution of the light intensity from a laser array's plurality of individual emitters having a certain non-uniformity profile at a minimal distance from the laser array where the distribution of light meets a uniformity criterion, according to examples of the presently disclosed subject matter;
**FIG. 3A-3C** are schematic illustrations of the distributions of light intensity emitted by the laser array at the planes associated with FIGs. 2A-2C, respectively;
**FIG. 4** is a graphical illustration showing by way of example the effect of using different masks with a given light intensity distribution thereon and the resulting projected pattern, according to examples of the presently disclosed subject matter;
**FIG. 5** is a graphical illustration of the effect of a certain relation among the density of the illumination pattern and the density of the mask's pattern on the resulting projected pattern, according to examples of the presently disclosed subject matter.
**FIG. 6** is a block diagram illustration of part of the projector for 3D range finding shown in FIG. 1, further including a diffuser positioned between the laser array and the mask, according to examples of the presently disclosed subject matter;
**FIG. 7** is a block diagram illustration of part of the projector for 3D range finding shown in FIG. 1, further including a micro lens array positioned between the laser array and the mask, according to examples of the presently disclosed subject matter;
**FIG. 8** is a graphical illustration of a segment of the projector for 3D range finding shown in FIG. 1, wherein the laser array has a reflective surface in the spacing in between the individual emitters, according to examples of the presently disclosed subject matter; and
**FIG. 9** is a block diagram illustration of a 3D imaging apparatus, according to examples of the presently disclosed subject matter.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### GENERAL DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures and components have not been described in detail so as not to obscure the presently disclosed subject matter.

Unless specifically stated otherwise, as apparent from the following discussions, it is appreciated that throughout the specification discussions various functional terms refer to the action and/or processes of a computer or computing device, or similar electronic computing device, that manipulate and/or transform data represented as physical, such as electronic, quantities within the computing device's registers and/or memories into other data similarly represented as physical quantities within the computing device's memories, registers or other such tangible information storage, transmission or display devices.

Provided below is a list of conventional terms in the field of image processing and in the field of digital video content systems and digital video processing. For each of the terms below a short definition is provided in accordance with each of the term's conventional meaning in the art. The terms provided below are known in the art and the following definitions are provided as a non-limiting example only for convenience purposes. Accordingly, the interpretation of the corresponding terms in the claims, unless stated otherwise, is not limited to the definitions below, and the terms used in the claims should be given their broadest reasonable interpretation.

According to an aspect of the presently disclosed subject matter, there is provided a three dimensional ("3D") imaging apparatus. According to examples of the presently disclosed subject matter, the 3D imaging apparatus includes a projector, and imaging sensor and a processing unit. The projector includes a laser array, a mask and projections optics. The laser array includes a plurality of individual emitters. The mask is adapted to provide a structured light pattern (when illuminated). The projection optics is configured to image the structured light pattern onto an object. The distance between the laser array and the mask can be minimized according to a non-uniformity profile of the plurality of individual emitters and according to a uniformity criterion related to the light intensity distribution across the mask plane. The imaging sensor is adapted to capture an image of the object with the structured light pattern projected thereon. The processing unit is configured to process the image to determine range parameters.

There is disclosed a non-claimed method of enabling 3D imaging. According to examples, the method of providing a 3D camera can include: positioning a mask for providing a structured light pattern relative to a laser array that includes a plurality of individual emitters at a distance that is substantially minimal according to a non-uniformity profile of the plurality of individual emitters and according to a uniformity criterion related to the light intensity distribution across the mask plane; positioning projection optics in the optical path of light from individual emitters passing through the mask, to enable imaging of the structured light pattern onto an object; positioning an imaging sensor in the optical path of reflected projected light to enable capturing of an image of the object with the structured light pattern projected thereon to further enable determining range parameters.

According to a further aspect of the presently disclosed subject matter there is provided a projector for 3D range according to claim 1. The distance between the laser array and the mask can be minimized according to a non-uniformity profile of the plurality of individual emitters and according to a uniformity criterion related to the light intensity distribution across the mask plane.

The laser array and the mask can be located at a minimal distance from one another where, according to a non-uniformity profile of the plurality of individual emitters, a desired uniformity criterion related to the light intensity distribution across the mask plane is achieved.

Also disclosed is a non-claimed method of providing a projector for 3D range finding. According to examples, the method can include: positioning a mask for providing a structured light pattern relative to a laser array that includes a plurality of individual emitters at a distance where according to a non-uniformity profile of the plurality of individual emitters and according to a desired uniformity of light intensity distribution across the mask plane is achieved; positioning projection optics in the optical path of light from individual emitters passing through the mask, to enable imaging of the structured light pattern onto an object; positioning an imaging sensor in the optical path of reflected projected light to enable capturing of an image of the object with the structured light pattern projected thereon to further enable determining range parameters.

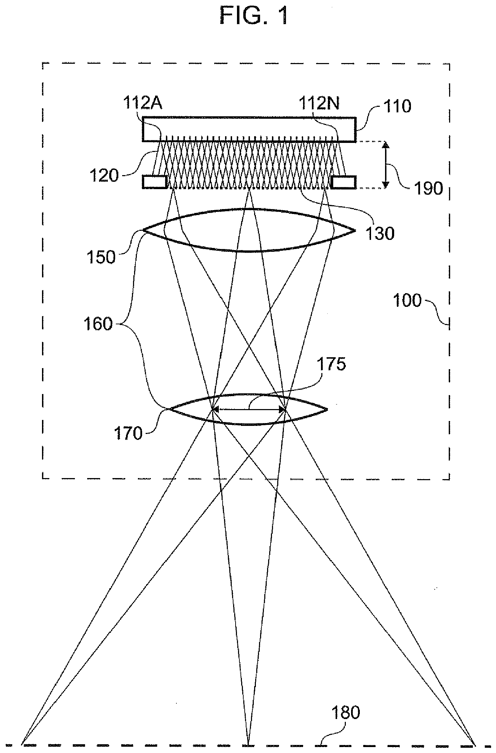

Reference is now made to **FIG. 1**, which is a block diagram illustration of a projector for 3D range finding, according to examples of the presently disclosed subject matter. According to examples of the presently disclosed subject matter, as will be further explained below, the projector 100 shown in FIG. 1 can be part of a 3D camera.

According to examples of the presently disclosed subject matter, the projector includes:
a laser array 110, a mask 130 and projection optics 160. The laser array can include a plurality of individual emitters 112A-112N. According to examples of the presently disclosed subject matter, the plurality of individual emitters 112A-112N in the laser array 100 are substantially non-coherent with one another.

By way of example, the laser array 110 shown in FIG. 1 is an array of vertical-cavity surface-emitting lasers ("VCSEL"). By way of non-limiting examples, a VCSEL array with an effective emitting area of 2.6 x 2.6 mm² can be used. Further by way of example, the VCSEL array can be adapted to produce peak power outputs of approximately 30 watts, when operated in pulsed mode. Each emitter in the VCSEL array can be configured to deliver a peak power in the order of 10mW. For a VCSEL array having about 3000 emitters, the total power can be in the order of about 30 watts. It would be appreciated that the above VCSEL array can be used to provide a large range of working distances, thanks to its relatively high power output. It would be further appreciated that the working distance can further depend on, inter-alia, the sensor sensitivity, camera optics and typical imaged objects (i.e. architecture modeling can be reliable at higher distances than human modeling, because the human skin reflects less than typical construction materials).

It would be appreciated that other types of laser array can be used as part of examples of the presently disclosed subject matter, and that a VCSEL is just one example of a possible type of laser arrays that can be used. Another example of a laser array that can be used as part of a projector for 3D range finding, according to examples of the presently disclosed subject matter, is an incoherent bundle of laser coupled optical fibers.

According to examples of the presently disclosed subject matter, the laser array 110 (e.g., a VCSEL array) can be configured such that each individual emitter 112A-112N emitter lases independently. Hence, there is (generally) no coherence between the individual emitters 112A-112N. It would be appreciated that using a laser array which has a plurality of individual emitters that are substantially not coherent with one another as a light source for a structured light pattern can reduce the speckle in the resulting projected pattern.

As will be described in further detail below, the light that is emitted by the laser array 110 is characterized by some non-uniformity profile of the plurality of individual emitters. The non-uniformity profile represents the changing distribution of light from the individual emitters 112A-112N of the laser array 110 with distance from the laser array.

In this regard it would be appreciated that at the plane of the laser array emitters 112A-112N, or immediately adjacent to the emitting surfaces of the emitters 112A-112N, the distribution of light is a result of the layout of the individual emitters 112A-112N. Since the individual emitters 112A-112N are spaced apart from one another, the light intensity distribution is highly non-uniform. For example, the individual emitter spot diameter can be about 12µ, and between the centers of each light spot there can be a spacing of about 50µ.

However, as can be seen by way of example in FIG. 1, each one of the individual emitters 112A-112N naturally emits light in a cone-like shape 120. Therefore, the distribution of the light intensity provided by the laser array 110 changes as the light propagates from the individual emitters 112A-112N. The changing light distribution is represented by the non-uniformity profile.

It would be appreciated that according to examples of the presently disclosed subject matter, different laser arrays can have different non-uniformity profiles. For example, different laser arrays can be designed with different emitting diameter of the individual emitter and/or with different spacing between the emitters. It would be appreciated that changing the emitting diameter also changes the beam divergence. For example, a 12µ emitter has a NA of 0.12, and a 6µ emitter will have a NA of 0.24. Different emitting diameter of the individual emitters and/or different spacing between the emitters yield different non-uniformity profiles. Accordingly, in examples of the presently disclosed subject matter, a laser array having a specific non-uniformity profile can be selected for use in the projector for 3D range finding.

The mask 130 is positioned at a distance 190 from the laser array 110. The mask 130 can be adapted to provide a structured light pattern when illuminated. According to examples of the presently disclosed subject matter, the mask 130 can include a combination of absorbing and reflecting patterns, which manipulate the light impinging on the mask's surface or passing through the mask 130, such that the light exiting the mask 130 provides a desired structured pattern of light. Those versed in the art would appreciate that other types of masks can be used for providing a desired structured pattern of light, for example, a holographic type micro lens array, and various types of gratings.

The projection optics 150 can be configured to image the structured light pattern onto an object, or onto an object plane 180. By way of example, the projection optics 160 in FIG. 1 consist of a field lens 150 and a projection lens 170. The field lens 150 can be used to manipulate the telecentric nature of the laser array emitter 110. It would be appreciated that various projection optics are known in the art, including combinations of various types of lenses and other optical elements and can be used in combination with the laser array 110 and the mask 130 according to examples of the presently disclosed subject matter. Different projection optics may be appropriate for different needs and the projection optics can be selected according to a specific need. The parameters that define the actual projection lens used are specifications of the angular field of view, desired resolution and depth of field constraints.

It would be appreciated that for certain applications, it is necessary to achieve a substantially uniform illumination of the mask 130 plane.

Take for example a mask that is configured to provide the pattern described in US Patent Publication No. 2010/0074532 filed November 20, 2007. This mask is configured to provide an encoded bi-dimensional light pattern that includes a predefined array of a finite set of identifiable feature types. The projected pattern can take the form of monochromatic light beams of varying intensity, wherein combinations of adjacent light beams comprise encoded features or letters having bi-dimensional spatial formations.

When projected onto an imaged object, the light beams intersect the imaged object's surfaces at various reflection points. Thus, if conditions allow, it is possible to discern reflections of the projected features in an image (typically a 2D image) captured by a sensor.

In order to determine range parameters for different points (or areas) on the surface of the imaged object, it is necessary to determine the projection geometry, including *inter-alia* the relationship between the location of feature types in the pattern and the location in the image of respective projection points. It is thus desirable to be able to discern the feature types in the image. If the feature types cannot be identified in the image, determining range parameters based on correlation with the pattern can become difficult and even impossible.

It would be appreciated that for the pattern described in US Patent Publication No. 2010/0074532, uniform light intensity distribution across the mask 130 plane is required. With a uniform light intensity distribution across the mask 130 plane, the light intensity distribution coming out of the mask 130, and the resulting projected pattern, can be closely correlated to the intended bi-dimensional light pattern.

As will be further discussed below, according to examples of the presently disclosed subject matter, the light intensity distribution on the object or scene for which range parameters are to be determined can be further influenced by certain characteristics of the mask 130 and of the structured light pattern which the mask 130 provides, and the uniformity criterion can relate to such characteristics of the mask 130. According to further examples of the presently disclosed subject matter, the light intensity distribution on the object or scene for which range parameters are to be determined can be influenced by the dynamic range of the object or the scene in respect of which range parameters are to be determined, and the uniformity criterion can relate to the dynamic range of the object or the scene. According to still further examples of the presently disclosed subject matter, the light intensity distribution on the object or scene for which range parameters are to be determined can be influenced by the relation among the density of the light intensity distribution pattern of the light that impinges upon the mask 130 plane and the density of the mask's 130 pattern, and the uniformity criterion can relate to this relation.

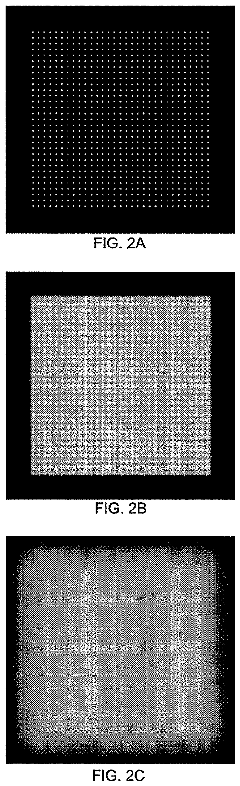

Reference is now made to **FIGs. 2A-2C****,** are simplified illustrations of the distribution of light emitted by the laser array at respective planes located at different distances from the emitting surface of the laser array emitters. In **FIG. 2A****,** a distribution of light at the plane of the emitters of the laser array or immediately adjacent to the emitting surfaces of the emitters is shown by way of example. As can be seen in FIG. 2A, the emitters 112A-112N are spaced apart and therefore the light intensity distribution immediately adjacent to the emitting surface of the emitters 112A-112N is in the form of relatively small (or focused) spots of light which are clearly distinct from one another, and in-between the spots of light, there are areas which are substantially not illuminated, or in other words, in between the spots of light there are substantially dark areas. For example, the individual emitter spot diameter can be about 12µ, and between the centers of each light spot there can be a spacing of about 50µ.

**FIG. 2B** illustrates by way of example the distribution of light at an intermediate plane located between a plane that is immediately adjacent to the emitting surfaces of the emitters and a plane at a distance from the emitters which is defined at least by a non-uniformity profile of the emitters and a uniformity criterion related to a desired light intensity distribution across the mask plane. As can be seen in FIG. 2B, at the intermediate plane, the light from individual emitters diverges, and the distribution of light has become more even across the intermediate plane, compared to the distribution of light at the plane that is immediately adjacent to the emitting surface of the emitters 112A-112N (e.g., in FIG. 2A).

Nonetheless, at least for some applications, the light distribution from the laser array 110 on the surface of the mask 130 at the intermediate point shown in FIG. 2B may be inappropriate. For example, in 3D range finding applications, at the intermediate point, the light distribution at the intermediate point may not be suitable for structured light pattern projection, since the structured light pattern that is projected by a mask 130 positioned at the intermediate plane and is illuminated by a laser array 110 with the light intensity distribution shown in FIG. 2B, could be degraded due to the non-uniform light projected onto the mask 130, to a degree where at least some of the projected feature types become difficult or impossible to identify.

In **FIG. 2C** there is shown by way of example, an illustration of the distribution of the light intensity from a laser array's plurality of individual emitters having a certain non-uniformity profile at a minimal distance from the laser array where the distribution of light meets a uniformity criterion, according to examples of the presently disclosed subject matter. As mentioned above, each one of the individual emitters 112A-112N emits light in a cone-like shape 120. As a result, light from individual emitters of the laser array 110 diverges according to a non-uniformity profile, and at some distance from the emitters 112A-112N, rays from adjacent emitters begin overlap. At first, when rays from adjacent emitters overlap, the overlap produces a light distribution that is similar to that which is shown in FIG. 2B. However, using the predefined non-uniformity profile, it is possible to find a minimal distance 190 at which a uniformity criterion that is related to the light intensity distribution from the laser array 110 is met. According to examples of the presently disclosed subject matter, positioning the mask 130 at the minimal distance 190 where, according to the non-uniformity profile of the laser array's light intensity distribution, the uniformity criterion is met can enable projection of a structured light pattern which is suitable for 3D range finding. This minimal distance 190 can depend and vary with factors such as a desired contrast, the desired application, the optical characteristics of the projected pattern, resolution, etc. According to examples of the presently disclosed subject matter, the minimal distance 190 where, according to the non-uniformity profile of the laser array's light intensity distribution, the uniformity criterion is met, can be determined empirically taking into account some or all of the factors mentioned above, and possibly also further on other factors. By way of non-limiting example, for certain 3D range finding applications and under certain conditions, an illumination profile of 12µ diameter 0.12NA emitters spaced 50µ apart may become sufficiently uniform at a distance of 0.5mm.

As mentioned above, and as will be further discussed below, additional factors can be taken into account when determining the minimal distance 190 between the laser array 110 and the mask 130, where the laser array's light intensity distribution is appropriate for enabling projection of a structured light pattern that is suitable for 3D range finding.

As mentioned above, the distance between the laser array 110 and the mask 130 can be minimized according to a non-uniformity profile of the plurality of individual emitters and according to a uniformity criterion related to the light intensity distribution across the mask plane. However, due to design preferences and/or other preferences, the mask 130 and the laser array can be positioned relative to one another slightly further away from the minimal distance without hampering the performance of the projector for 3D range finding applications, or the performance of a 3D camera which the projector is part of.

In still further examples of the presently disclosed subject matter, there can be provided a maximal distance for positioning the mask 130 relative to the laser array 110. By way of example, the maximal distance can be associated with predetermined minimum power transfer of the laser array source through the mask. Further by way of example the maximal distance can be associated with predetermined light intensity criterion across the mask surface. By way of one specific example the predetermined criteria can be a minimum power transfer of 85%, and the criterion that the light intensity at the edge of the mask does not drop below 80% of its value at the center of the mask illumination area.

According to examples of the presently disclosed subject matter, the mask 130 can be positioned within a certain range from the laser array 110, wherein the range can be determined according to the minimal distance, which is in turn determined according to the non-uniformity profile of the plurality of individual emitters and according to a uniformity criterion related to the light intensity distribution across the mask plane, and further according to the maximal distance.

For convenience, in the description of examples of the presently disclosed subject matter, reference is generally made to the minimal distance between the mask and the laser array or to the determination of the minimal distance. It should be appreciated however, that many of the examples presently disclosed herein can also relate to positioning of the mask and laser array within the range that is determined according to the minimal distance and according to the maximal distance described above. Likewise, instead of determining the minimal distance, a range can be determined based on the minimal distance and the maximal distance. Thus, it should be noted that the examples described herein with reference to the minimal distance can also be applied to the range associated with minimal distance and the maximal distance.

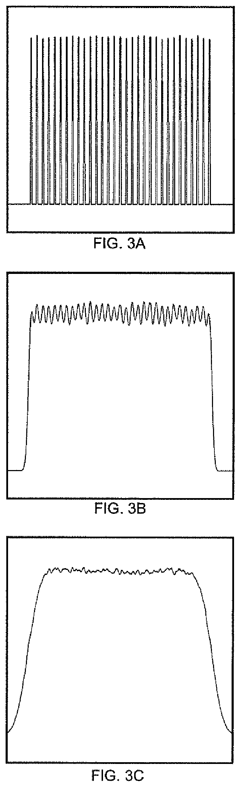

FIGs. 3A-3C are schematic illustrations of the distributions of light intensity emitted by the laser array at the planes associated with FIGs. 2A-2C, respectively. FIG. 3A corresponds to FIG. 2A, and provides a schematic illustration of the distribution of light intensity at the plane of the laser array 110 emitters 112A-112N or immediately adjacent to the emitting surface of the emitters 112A-112N. FIG. 3B corresponds to FIG. 2B, and provides a schematic illustration of the light intensity distribution at an intermediate plane located between a plane that is immediately adjacent to the emitting surfaces of the emitters 112A-112N and a plane that is at a minimal distance where according to the non-uniformity profile of the light emitted by the laser array, the light intensity distribution meets a uniformity criterion. FIG. 3C corresponds to FIG. 2C, and provides a schematic illustration of the light intensity distribution at a plane located at a minimal distance from the laser array, where according to the non-uniformity profile of light emitted by the laser array, the light intensity distribution meets a uniformity criterion.

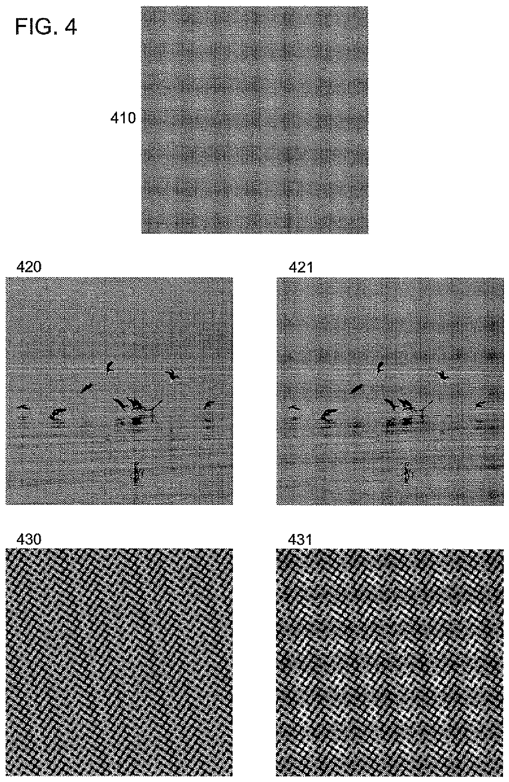

Reference is now made to **FIG. 4****,** showing the effect which using different masks with a given light intensity distribution thereon can have on the resulting projected pattern, according to examples of the presently disclosed subject matter. As mentioned above, in accordance with examples of the presently disclosed subject matter, a laser array is comprised of a plurality of individual emitters which are spaced apart from one another. The individual emitters emit light (or radiation) in a cone-like shape 120, and the light diverges from the individual emitters according to a non-uniformity profile. Very close to the emitting surface of the individual emitters the light intensity distribution appears as relatively focused spots of light separate by relatively large dark areas. The distribution of the light intensity provided by the laser array 110 changes according to the laser array's non-uniformity profile as the light propagates from the individual emitters. At some distance from the emitters, rays from adjacent emitters begin overlap, and the light intensity distribution gradually becomes more and more uniform.

The light intensity distribution 410 represents an intermediate level of light intensity distribution. In combination with the mask 420, the non-uniformity of the light intensity distribution 410 appears as noise in the projected pattern 421. In projection systems aimed for human viewing (e.g. video projectors), such non-uniformity can be undesired, for aesthetic reasons. However, the projected pattern 431, which is a result of projecting the same light intensity distribution 410 onto structured light pattern 430 can be useful for 3D range finding applications, despite the added noise, since local features of the pattern are still distinguishable, and can be accurately localized. The differences between the projection masks 420 and 430 and the resulting projected patterns 421 and 431, respectively, serves as a simplified example of the manner by which the light intensity distribution on the object or scene for which range parameters are to be determined can be further influenced by certain characteristics of the mask and of the structured light pattern which the mask provides. As mentioned above, according to examples of the presently disclosed subject matter, the uniformity criterion can relate to such characteristics of the mask.

In further examples of the presently disclosed subject matter, a tolerance specification can be provided, and determining the minimal distance between the laser array and the mask can be carried out according to a non-uniformity profile of the plurality of individual emitters, according to a uniformity criterion related to the light intensity distribution across the mask plane, and further according to the tolerance specification.

According to further examples of the presently disclosed subject matter, the tolerance specification can be related to characteristics of the mask and/or of the structured light pattern which the mask provides. In yet further examples of the presently disclosed subject matter, determining the minimal distance between the laser array and the mask can be carried out according to a non-uniformity profile of the plurality of individual emitters, according to a uniformity criterion related to the light intensity distribution across the mask plane, and further according to the tolerance specification related to characteristics of the mask and/or of the structured light pattern which the mask provides.

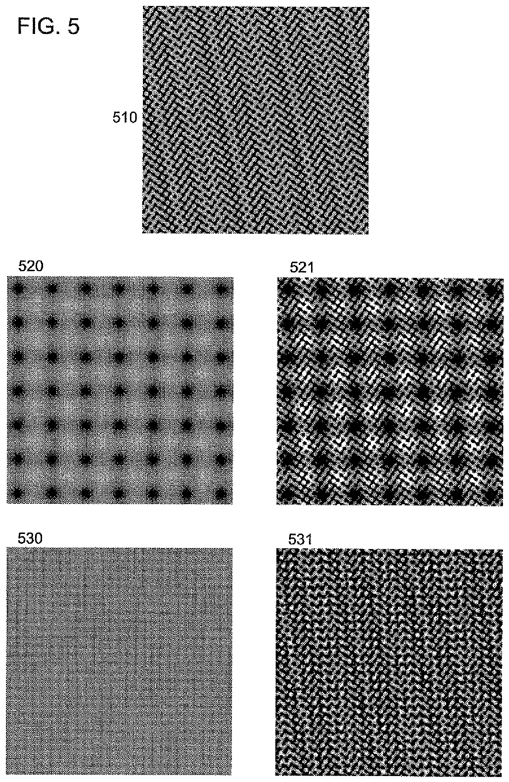

Reference is now made to **FIG.** 5, which is an illustration of the effect which the relation among the density of the illumination pattern and the density of the mask's pattern can have on the resulting projected pattern, according to examples of the presently disclosed subject matter. The projected light pattern 521 is the result of illuminating mask 510 with light intensity distribution 520. The light intensity distribution 520 is highly non-uniform and the resulting projected light pattern 521 is corrupted as a result (features types are difficult or impossible to identify in the projected light pattern 521).

The light intensity distribution 530 is clearly more uniform compared to light intensity distribution 520. However, although the intensity variance in light intensity distribution 530 is not as high as in light intensity distribution 520, the feature types have become difficult or impossible to identify in the projected light pattern 531, because the density of the peaks in the light intensity distribution 530 is of the same order as the features' density in the mask 510, leading to undesired interferences, which distort the local features in the projected pattern 531. The interference between the light intensity distribution pattern of the light that impinges upon the mask, and the masks' features, serves as a simplified example of the manner by which the density of the light intensity distribution pattern of the light that impinges upon the mask and the density of the mask's pattern can interact and cause interference in the local features in the projected pattern.

As mentioned above, according to examples of the presently disclosed subject matter, the uniformity criterion can relate to the density of the light intensity distribution pattern of the light that impinges upon the mask and the density of the mask's pattern.

In further examples of the presently disclosed subject matter, a constraint specification can be provided, and determining the minimal distance between the laser array and the mask can be carried out according to a non-uniformity profile of the plurality of individual emitters, according to a uniformity criterion related to the light intensity distribution across the mask plane, and further according to the constraint specification. In still further examples of the presently disclosed subject matter, determining the minimal distance between the laser array and the mask can be carried out according to a non-uniformity profile of the plurality of individual emitters, according to a uniformity criterion related to the light intensity distribution across the mask plane, according to the constraint specification, and further according to the tolerance specification.

According to further examples of the presently disclosed subject matter, the constraint specification can be related to a relation among the density of the light intensity distribution pattern of the light that impinges upon the mask and the density of the mask's pattern. In yet further examples of the presently disclosed subject matter, determining the minimal distance between the laser array and the mask can be carried out according to a non-uniformity profile of the plurality of individual emitters, according to a uniformity criterion related to the light intensity distribution across the mask plane, according to the constraint specification related to a relation among the density of the light intensity distribution pattern of the light that impinges upon the mask and the density of the mask's pattern, and further according to the tolerance specification related to characteristics of the mask and/or of the structured light pattern which the mask provides.

Having described various features of the projector and of the 3D imaging apparatus according to examples of the presently disclosed subject matter, which are associated with a minimal distance between a laser array and a mask for providing a projected light pattern for 3D range finding, additional features of the projector and of the 3D imaging apparatus according to further examples of the presently disclosed subject matter are now described.

According to examples of the presently disclosed subject matter, the mask, and the pattern provided by the mask, can be sized according to a spatial intensity profile of the light emitted by the laser array. Further by way of example, the mask, and the pattern provided by the mask, can be sized according to a spatial intensity profile of the light emitted by the laser array at the minimal distance where, according to the non-uniformity profile of the laser array's light intensity distribution, the uniformity criterion is met.

Turning back now to FIG. 1, as mentioned above, according to examples of the presently disclosed subject matter, the mask 130 is located at a minimal distance 190 from the laser array 110, where a desired uniformity criterion related to the light intensity distribution across the mask plane is met. As was also mentioned above, the minimal distance 190 can be determined further according to a constraint specification and according to a tolerance specification.

It would be appreciated that the uniformity of the light intensity distribution from the laser array at the minimal distance 190 is achieved thanks to the emission profile of adjacent individual emitters in the laser array 110, and the overlap among rays from adjacent emitters. The emission profile of individual emitters in the laser array 110 was described above, by way of example, as having a cone-like shape 120, and in FIG. 1 it can be seen that the light from individual emitters spreads out with distance from the emitters. At some point the light cones 120 of adjacent emitters begin to overlap. The extent of overlap increases with distances from the emitters.

However, at the edges of the spatial intensity profile, in particular at the minimal distance 190, the edge emitters are not surrounded by neighboring emitters, and therefore the light intensity is weaker at the edges of the light from the laser array 110. This can be seen for example in FIG. 2C and in the diagram of FIG. 3C.

According to examples of the presently disclosed subject matter, the mask 130 can be sized according to the spatial intensity profile of the light that is emitted by the laser array 110. In further examples of the presently disclosed subject matter, the mask 130 can be truncated to cover substantially the entire area of the light produced by the laser array 110 at the minimal distance 190, except for the periphery where the light intensity distribution is substantially less uniform.

According to further examples of the presently disclosed subject matter, determining the minimal distance 190 can be further determined according to a periphery specification. The periphery specification can be used to specify a periphery of the light produced by the laser array, which can be disregarded when determining the minimal distance where the light from the laser array 110 complies with the uniformity criterion. The periphery can be specified as that region where the light intensity drops below a certain percentage (e.g., 80%) of its value at the center of the illumination area.

In still further examples of the presently disclosed subject matter, the mask 130 can be sized according to a light power transfer criterion. In yet further examples of the presently disclosed subject matter, the light power transfer criterion can be used in conjunction with the periphery specification to determine the size of the mask 130. As mentioned above, the light intensity at the periphery of the light that is emitted by the laser array 110 is substantially less uniform, and in some examples of the presently disclosed subject matter, it is therefore desirable to have a mask which is truncated to maintain uniform light intensity distribution across the mask 130. However, reducing the mask's 130 size reduces the overall light power transfer. Accordingly, in some examples of the presently disclosed subject matter, a light power transfer criterion can be used to constrain the truncation of the mask, e.g., according to the spatial intensity profile, and can protect against over-truncation of the mask 130. The light power transfer criterion can be used together with the periphery specification to determine the mask's 130 size.

According to examples of the presently disclosed subject matter, the mask's 130 size can be evaluated according to the relevant conditions when the mask 130 is positioned at the minimal distance 190 from the laser array 110.

According to further examples of the presently disclosed subject matter, determining the minimal distance 190 can be further determined according to a periphery specification. The periphery specification can be used to specify a periphery of the light produced by the laser array, which can be disregarded when determining the minimal distance where the light from the laser array 110 complies with the uniformity criterion

According to examples of the presently disclosed subject matter, a defective emitter criterion can be provided. The defective emitter criterion can be used to specify a distribution and/or a ratio of individual defective emitters among the plurality of individual emitters 112A-112N which is considered to qualify the emitter as an appropriate light source of the projector 100. As mentioned above, the projector 100 is intended to be used for providing a structured light pattern for 3D range finding applications. Accordingly, if the light source (the laser array 110) has too many individual defective emitters, the output of the light source can be too low and the structured light pattern cannot be projected far enough to enable broad range 3D range finding. Thus, according to examples of the presently disclosed subject matter, a defective emitter criterion can be provided and can be used to reject laser arrays that include a number of defective individual emitters that is greater than some threshold. It would be appreciated that the threshold is not necessarily a fixed number, but rather can be some ratio of the total number of individual emitters in the laser array, or any other appropriate measure.

Furthermore, as was mentioned above, the non-uniformity profile of the plurality of individual emitters of the projector's laser array source (a laser array) can be used to determine a minimal distance where the mask can be positioned relative to the light source, so that the light intensity distribution across the mask plane meets a uniformity criterion. Accordingly, if the light source has relatively large clusters of defective emitters, the light from the light source would have significant dark spots, and the uniformity of the light intensity distribution can be hampered, causing the projected light pattern to become corrupted. Thus, according to examples of the presently disclosed subject matter, a defective emitter criterion can be provided and can be used to reject laser arrays that include a relatively large cluster(s) of defective individual emitters. It would be appreciated that the defective criterion can relate to number of defective emitters (or a similar measure of the rate of defective emitters) or to the extent (size, ratio, etc.) of clusters of defective individual emitters, or to both.

According to examples of the presently disclosed subject matter, the projection lens 170 can be selected such that the entrance pupil 175 is matched to the divergence of the light from the laser array 110, or vice-versa.

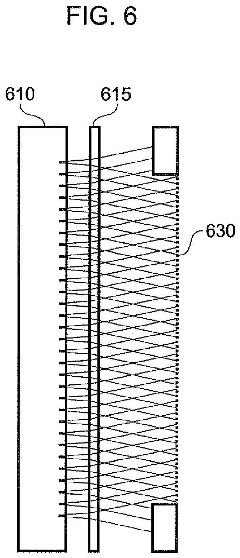

Reference is now made to FIG. 6, where there is shown a block diagram illustration of part of the projector for 3D range finding shown in FIG. 1, further including a diffuser positioned between the laser array and the mask, according to examples of the presently disclosed subject matter. According to examples of the presently disclosed subject matter, a diffuser 615 can be positioned between the laser array 610 and the mask 630 to shorten the minimal distance between the laser array 610 and the mask 630, where given the non-uniformity profile of the laser array's 610 light intensity distribution, the uniformity criterion is met.

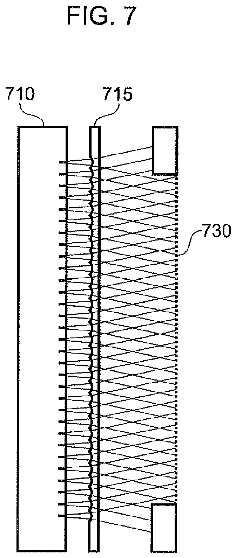

Referring now to FIG. 7, there is shown a block diagram illustration of a segment of the projector for 3D range finding shown in FIG. 1, further including a micro lens array positioned between the laser array and the mask. According to examples of the presently disclosed subject matter, a micro lens array 715 can be positioned between the laser array 710 and the mask 730 to shorten the minimal distance between the laser array 710 and the mask 730, where given the non-uniformity profile of the laser array's 710 light intensity distribution, the uniformity criterion is met.

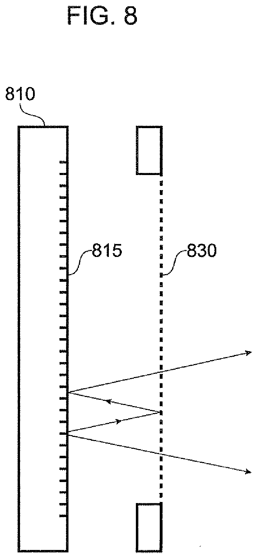

According to examples of the presently disclosed subject matter, the laser array can have a reflective surface in the spacing in between the individual emitters. Reference is now made to FIG. 8, which is a graphical illustration of a segment of the projector for 3D range finding shown in FIG. 1, wherein the laser array has a reflective surface in the spacing in between the individual emitters, according to examples of the presently disclosed subject matter. The mask 830 that is used to provide the desired projected light pattern can use reflective and transmissive areas to selectively transmit the light from the laser array 810, and thus produce the desired projected light pattern. According to examples of the presently disclosed subject matter, since the area of the spacings between the individual emitters of the laser array 810 is substantially greater than the area of the emitters themselves, a substantial portion of the light that is reflected by the reflective portions of the mask 830 is likely to be reflected back by the reflective surface 815 in between the emitters. Consequently, the light that is reflected from the mask 830 back towards the reflective surface 815, would be reflected once more. This reflection cycle can occur until the light reflected from the reflective surface 815 impinges upon a transsmisive area of the mask 830, and is emitted out of the projector.

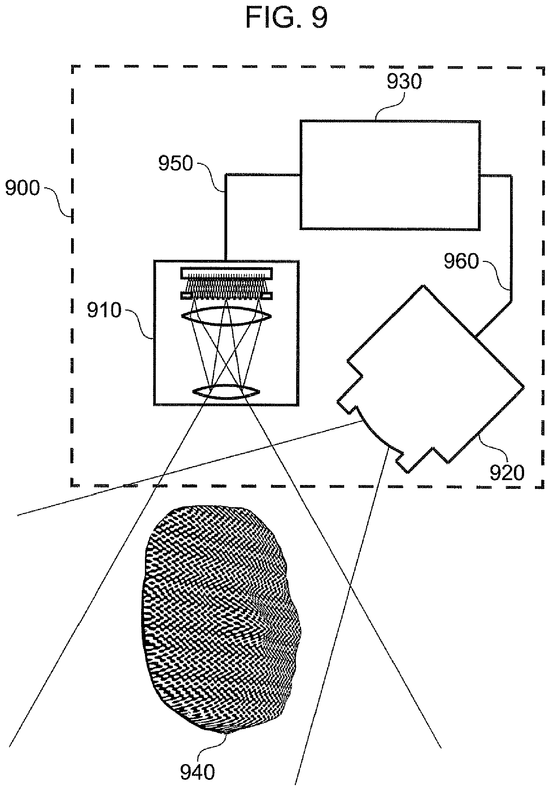

According to an aspect of the examples of the presently disclosed subject matter, a 3D imaging apparatus can be provided, which includes a projector for 3D range finding according to the examples of the subject matter that were described above. FIG. 9, to which reference is now made, is a block diagram illustration of a 3D imaging apparatus, according to examples of the presently disclosed subject matter. According to examples of the presently disclosed subject matter, the 3D imaging apparatus 900 can include an imaging sensor 920, a processing unit 930 and a projector 910.

The projector 910 can include a laser array comprising a plurality of individual emitters, and a mask, wherein a distance between the laser array and the mask is substantially minimized according to a non-uniformity profile of the plurality of individual emitters and according to a uniformity criterion related to the light intensity distribution across the mask plane. The projector 910 can be implemented in accordance with the examples of the projector described hereinabove, including but not limited to with reference to FIGs. 1-8.

The imaging sensor 920 can be adapted to capture an image of the object with the structured light pattern projected thereon. There is a variety of imaging sensors which can be used for capturing an image of the object with the structured light pattern projected thereon and to provide an image that is suitable for 3D range finding applications. Any suitable imaging sensor that is currently available or that will be available in the future can be used for capturing an image of the object with the structured light pattern projected thereon.

According to examples of the presently disclosed subject matter, the imaging sensor 920 can be positioned relative to the projector 910 in a manner to provide a specific imaging geometry that is appropriate for 3D range finding applications. In further examples of the presently disclosed subject matter, the imaging sensor can be operatively connected to the projector 910 and the operation of the imaging sensor 920 and of the projector 910 can be synchronized, for example, in order to achieve better power efficiency for the 3D imaging apparatus 900.

According to examples of the presently disclosed subject matter, the processing unit 930 can be adapted to process an image that was captured by the imaging sensor 920, and can provide range parameters. Various algorithms which can be used to extract range parameters from an image of an object having projected thereupon a pattern can be implemented by the processing unit 930.

## Claims

1. A structured light projector, comprising:
a laser array (810) comprising a plurality of individual light emitters; and
a mask (830) including reflective areas and transmissive areas to selectively transmit light from the laser array (810), and to thereby produce a desired projected light pattern;
**characterized in that**: the laser array (810) has a reflective surface (815) in the spacing between individual emitters of the laser array (810), such that when the laser array is activated, a portion of the light from the laser array (810) is reflected by the mask (830) back towards the reflective surface (815), and is reflected from the reflective surface (815) towards the mask (830).

2. The projector according to claim 1, wherein the area of the spacings between the plurality of individual emitters is greater than the area of the emitters themselves.

3. The projector according to any one of claims 1-2, wherein a reflection cycle is formed when light from the laser array is reflected by the mask back towards the reflective surface, and wherein the reflection cycle occurs until light reflected from the reflective surface impinges upon a transmissive area of the mask, and is emitted out of the projector.

4. The projector according to any one of claims 1-3, wherein the laser array emits light, the mask provides a projected structured light pattern that is comprised of features encoded by adjacent light beams forming predefined spatial intensity formations.

5. A three dimensional imaging device, comprising:
a structured light projector according to any one of claims 1 to 4, and further comprising:
projection optics configured to receive light passing through the mask, and configured to image a structured light pattern onto an object;
an imaging sensor configured to generate an image of the object with the structured light pattern projected thereon from a reflected portion of the projected structured light pattern: and
a processing unit configured to process the image to determine range parameters.

## Patentansprüche

1. Strukturierter Lichtprojektor, umfassend:
eine Laseranordnung (810), die eine Vielzahl von einzelnen Lichtemittern umfasst; und
eine Maske (830), die reflektierende Bereiche und durchlässige Bereiche aufweist, um selektiv Licht aus der Laseranordnung (810) zu übertragen und dadurch ein gewünschtes projiziertes Lichtmuster zu erzeugen;
**dadurch gekennzeichnet, dass** die Laseranordnung (810) eine reflektierende Oberfläche (815) in dem Abstand zwischen einzelnen Emittern der Laseranordnung (810) aufweist, so dass bei Aktivierung der Laseranordnung ein Teil des Lichts aus der Laseranordnung (810) von der Maske (830) zurück zur reflektierenden Oberfläche (815) reflektiert wird und von der reflektierenden Oberfläche (815) zur Maske (830) reflektiert wird.

2. Projektor nach Anspruch 1, wobei die Fläche der Abstände zwischen der Vielzahl von einzelnen Emittern größer als die Fläche der Emitter selbst ist.

3. Projektor nach einem der Ansprüche 1 bis 2, wobei ein Reflexionszyklus gebildet wird, wenn Licht aus der Laseranordnung von der Maske zurück zur reflektierenden Oberfläche reflektiert wird, und wobei der Reflexionszyklus auftritt, bis von der reflektierenden Oberfläche reflektiertes Licht auf einen durchlässigen Bereich der Maske trifft und aus dem Projektor ausgesendet wird.

4. Projektor nach einem der Ansprüche 1 bis 3, wobei die Laseranordnung Licht emittiert, die Maske ein projiziertes strukturiertes Lichtmuster bereitstellt, das aus Merkmalen besteht, die von benachbarten Lichtstrahlen kodiert werden, die vordefinierte räumliche Intensitätsformationen bilden.

5. Dreidimensionale Abbildungsvorrichtung, umfassend:
einen strukturierten Lichtprojektor nach einem der Ansprüche 1 bis 4, und des Weiteren umfassend: eine Projektionsoptik, die konfiguriert wird, um Licht zu empfangen, das durch die Maske verläuft und konfiguriert wird, um ein strukturiertes Lichtmuster auf ein Objekt abzubilden;
einen Bildsensor, der konfiguriert wird, um ein Bild des Objekts mit dem darauf projizierten strukturierten Lichtmuster aus einem reflektierten Abschnitt des projizierten strukturierten Lichtmusters zu erzeugen: und
eine Verarbeitungseinheit, die konfiguriert wird, um das Bild zu verarbeiten, um Bereichsparameter zu bestimmen.

## Revendications

1. Projecteur de lumière structurée comprenant :
un réseau laser (810) comprenant une pluralité d'émetteurs de lumière individuels ; et
un masque (830) comprenant des zones réfléchissantes et des zones transmissives pour transmettre de façon sélective de la lumière depuis le réseau laser (810), et produire ainsi une configuration désirée de lumière projetée ;
**caractérisé en ce que** :
le réseau laser (810) possède une surface réfléchissante (815) dans l'espace entre des émetteurs individuels du réseau laser (810), de sorte que lors de l'activation du réseau laser, une partie de la lumière émise par le réseau laser (810) est réfléchie par le masque (830) vers la surface réfléchissante (815), et est réfléchie de la surface réfléchissante (815) au masque (830).

2. Projecteur selon la revendication 1, la zone des espacements entre la pluralité d'émetteurs individuels étant plus grande que la zone des émetteurs.

3. Projecteur selon une quelconque des revendications 1-2, le cycle de réflexion étant formé lorsque de la lumière provenant du réseau laser est réfléchie par le masque en direction de la surface réfléchissante, et le cycle de réflexion se déroulant jusqu'à ce que la lumière réfléchie par la surface réfléchissante vienne heurter une zone transmissive du masque, et soit émise par le projecteur.

4. Projecteur selon une quelconque des revendications 1-3, le réseau laser émettant de la lumière, le masque fournissant une configuration de lumière structurée projetée comprenant des fonctions codées par des faisceaux lumineux adjacents constituant des formations à intensité spatiale prédéfinies.

5. Dispositif d'imagerie tridimensionnelle comprenant :
un projecteur de lumière structurée selon une quelconque des revendications 1 à 4, comprenant en outre :
des optiques de projection configurées pour recevoir de la lumière passant à travers le masque, et configurées pour imager une configuration de lumière structurée sur un objet ;
un capteur d'imagerie configuré pour générer une image de l'objet, la configuration de lumière structurée étant projetée sur celui-ci depuis une partie réfléchie de la configuration de lumière structurée projetée ; et
une unité de traitement configurée pour traiter l'image afin de déterminer des paramètres de distance.
